# EUROPÄISCHE PATENTSCHRIFT

(11) **EP 2 881 610 B1**
(45) Veröffentlichungstag und Bekanntmachung des Hinweises auf die Patenterteilung: **09.05.2018**
(21) Anmeldenummer: 14195743.1
(22) Anmeldetag: 02.12.2014
(51) Int. Cl.: F16D 55/226

(54) **Bremssattel einer Scheibenbremse**
Brake calliper for a disc brake
Étrier de frein pour un frein à disque

(30) Priorität: 05.12.2013 DE 102013113547
(43) Veröffentlichungstag der Anmeldung: 10.06.2015
(73) Patentinhaber: KNORR-BREMSE Systeme für Nutzfahrzeuge GmbH, 80809 München (DE)
(72) Erfinder: Stöger, Christian, 94474 Vilshofen (DE)

(56) Entgegenhaltungen:
- DE-A1- 2 739 477
- DE-B3-102011 103 963
- JP-A- 2013 029 114
- US-A- 4 630 713

## Beschreibung

Die Erfindung betrifft einen Bremssattel einer Scheibenbremse nach dem Oberbegriff des Anspruchs 1.

Als Bestandteil einer Scheibenbremse dient der Bremssattel in der Hauptsache dazu Funktionsteile aufzunehmen, die zum Bremsbetrieb erforderlich sind. Hierzu zählen insbesondere eine Zuspanneinrichtung, die in einer Aufnahmekammer des Bremssattels angeordnet ist, sowie Bremsbeläge, die beidseitig einer Bremsscheibe positioniert sind und die beim Bremsen gegen die Bremsscheibe gepresst werden.

Dabei ist die die Zuspanneinrichtung aufnehmende Aufnahmekammer in einem Gehäuse vorgesehen, das über zwei, parallel und abständig zueinander angeordnete Zugstreben mit einem Sattelrücken verbunden ist.

Die eine seitliche Begrenzung für eine Montageöffnung, durch die die Bremsbeläge einsetzbar sind, bildenden Zugstreben überspannen die Bremsscheibe und nehmen die bei einer Bremsung auftretenden Belastungen auf.

Dabei wird die auf die auf die Bremsbeläge einwirkende Zuspannkraft über die Zuspanneinrichtung erzeugt, wobei mittels eines Bremshebels, der über einen Bremszylinder verschwenkbar ist, die Bremsbeläge gegen die Bremsscheibe gepresst werden. Dies führt zu einer Verformung des Bremssattels, woraus sich in den Zugstreben Spannungen ergeben.

Bei dynamischer Belastung, wie sie im Fahrbetrieb auftritt, muss der Bremssattel für eine bestimmte Anzahl von Lastwechsel dimensioniert sein. Vor allem der die Montageöffnung begrenzende innere Bereich und zwar der dem Sattelrücken zugewandte wird dabei besonders stark belastet.

Zur Erreichung einer ausreichenden Belastbarkeit der Zugstreben bei reduziertem Materialeinsatz des aus Gusseisen bestehenden Bremssattels ist es bekannt, die Zugstreben auf ihren einander zugewandten Seiten sowohl in Längsrichtung wie auch quer dazu konkav auszubilden, so dass der Mittenbereich jeder Zugstrebe tailliert ist (JP 2013 029 114 A).

Allerdings gehen Forderungen dahin, den Bremssattel sowohl belastungs- wie auch materialoptimiert zu gestalten, wobei letzteres durch eine weiter verschlankte Raumform erreicht werden soll, ohne die Festigkeit in den entsprechend beanspruchten Bereichen zu beeinträchtigen.

Die bislang zum Einsatz kommenden Bremssättel stellen sich aufgrund der Geometrie der Zugstreben zwar als robust, aber gleichzeitig als schwer dar, was einer stets angestrebten Gewichtsreduzierung von Bauteilen in Nutzfahrzeugen entgegensteht.

In der DE 27 39 477 A1 ist ein Bremssattel offenbart, bei dem die Zugstreben auf ihren einander zugewandten Längsseiten mit gerade verlaufende Führungsflächen ausgebildet sind, die jeweils auf ihrer dem Sattelrücken zugewandten Seite erhaben und auf ihrem der Zuspanneinrichtung zugewandten Bereich zurückgesetzt ausgeformt sind.

Aus der US 4 630 713 A ist ein Bremssattel bekannt, der aus zwei miteinander verschraubten Teilen besteht und dessen Zugstreben in einem Teilbereich in Achsrichtung zur Bremsscheibe parallel verlaufen und in einem weiteren Teilbereich schräg dazu.

Der Erfindung liegt die Aufgabe zugrunde, einen Bremssattel der gattungsgemäßen Art so weiterzuentwickeln, dass er bei gleichbleibender Belastbarkeit mit geringerem Materialeinsatz oder bei gleichem Materialeinsatz eine höhere Belastbarkeit aufweist.

Diese Aufgabe wird durch einen Bremssattel mit den Merkmalen des Anspruchs 1 gelöst.

Durch diese konstruktive Ausbildung wird bei unveränderter Belastungsfähigkeit eine Gewichtsoptimierung erreicht, da die bei einer Bremsung auftretenden Spannungen in dem durch die Erfindung definierten konvexen Bereich auftreten. Der sich anschließende, wenig belastete konkave Bereich kann im gewichtsoptimierten Sinn schmal gehalten sein, ohne Einbuße der Belastbarkeit des Bremssattels.

Durch die erfindungsgemäße Formgebung der Zugstreben wird eine gleichmäßigere Verteilung der Spannungen erreicht, d.h. der Bereich jeder Zugstrebe, der bislang konzentriert die Spannungen aufnimmt, wird nun sozusagen entlastet, was eine ganze Reihe von Vorteilen mit sich bringt.

So ist zunächst einmal eine kostengünstigere und einfachere Herstellung des Bremssattels hervorzuheben, da der konvexe Bereich gegenüber Ausschusskriterien, wie Werkstoffungänzungen, z.B. in Form von Poren oder dergleichen unempfindlicher ist.

Zur Kostenreduzierung des neuen Bremssattels trägt auch bei, dass durch die weniger hohe Belastung im kritischen, d.h. im konvexen Bereich ein qualitativ minderer Werkstoff verwendet werden kann, um eine gleiche Standzeit wie bisher zu erreichen, wobei dieser Werkstoff naturgemäß kostengünstiger ist.

Die Materialeinsparung führt neben geringen Herstellungskosten auch zu niedrigeren Betriebskosten des Nutzfahrzeuges, da der Bremssattel nunmehr leichter ist als einer nach dem Stand der Technik. Die Gewichtsreduzierung führt zu einer Verringerung des Kraftstoffverbrauchs, zumal bei einem Nutzfahrzeug relativ viele Scheibenbremsen zum Einsatz kommen. Neben der Optimierung hinsichtlich der Betriebskosten ist die Gewichtsreduzierung, d.h., der verringerte Kraftstoffverbrauch auch bezüglich einer Emissionsverringerung bemerkenswert.

Die Gestaltung der Zugstreben kann so erfolgen, dass beide Zugstreben praktisch spiegelsymmetrisch, bezogen auf die Drehachse der Bremsscheibe ausgebildet sind. Denkbar ist aber auch eine davon abweichende Form, wobei davon auszugehen ist, dass die höhere Belastung auf die Zugstrebe einwirkt, die die Bremskräfte in Vorwärtsfahrtrichtung in größerem Maße aufnehmen muss als die andere Zugstrebe.

Die konvex/konkave Ausformung der die Montageöffnung des Bremssattels begrenzenden Innenseite der Zugstrebe kann sowohl in Längsrichtung wie auch quer dazu entsprechend ausgebildet sein. Denkbar ist aber auch, in Querrichtung, also bezogen auf die Bremsscheibe radial davon, abweichend wie bisher eine konkave Gestaltung vorzusehen.

Ein harmonischer, d.h. leicht gekrümmter und nicht kantiger Übergang von der konvexen zur konkaven Ausformung führt zu einer weiter optimierten Spannungsverteilung. Ebenso ist ein gekrümmter Übergang des konvexen Bereichs zum Sattelrücken vorgesehen. Die Länge des konvexen Bereiches entspricht etwa der des konkaven, wobei der gemeinsame Übergang einen Scheitelpunkt bildet.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen erfindungsgemäßen Bremssattel in einer Draufsicht
- Figur 2: den Bremssattel in seiner Seitenansicht
- Figur 3: in einem Diagramm den Unterschied der lichten Weite der Montageöffnung des Bremssattels gemäß der Erfindung zu einem Bremssattel nach dem Stand der Technik
- Figur 4: in einem Diagramm den Unterschied des Flächeninhalts einer Zugstrebe nach dem Stand der Technik zu einer gemäß der Erfindung.

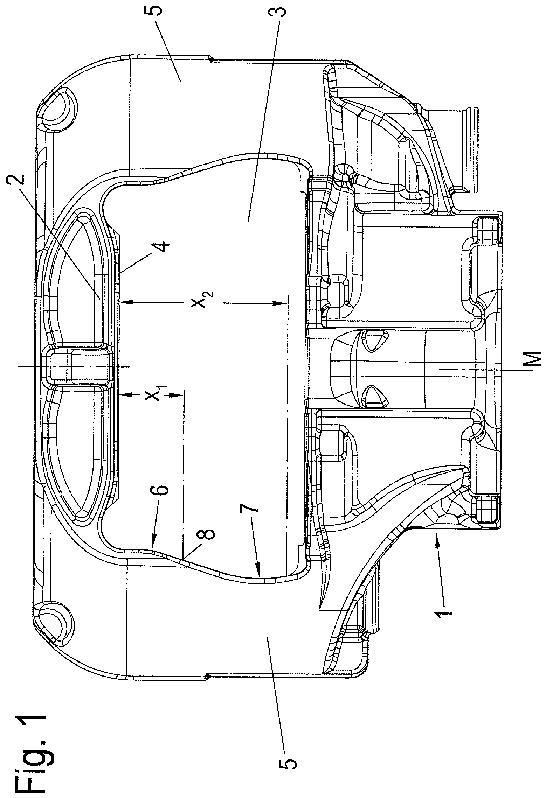

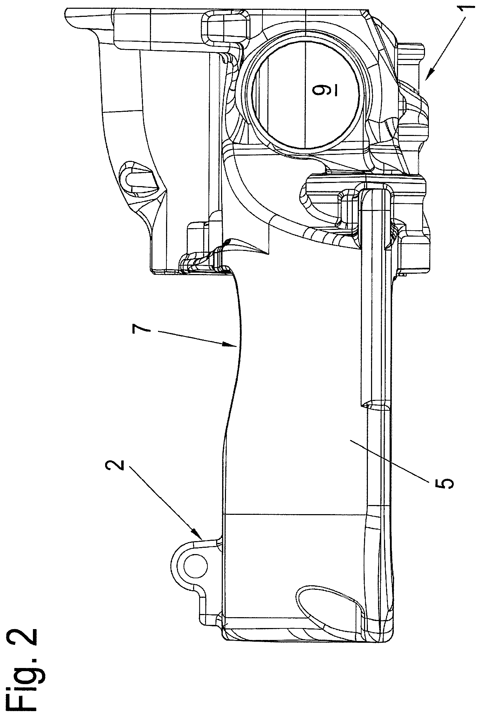

In den Figuren 1 und 2 ist ein Bremssattel für eine Scheibenbremse eines Nutzfahrzeuges dargestellt mit einem eine Aufnahmekammer 9 aufweisenden Gehäuse 1, einem dazu gegenüberliegenden Sattelrücken 2 sowie zwei im Wesentlichen parallel und abständig zueinander verlaufende, den Sattelrücken 2 und das Gehäuse 1 starr miteinander verbindenden Zugstreben 5.

Die Aufnahmekammer 9 dient der Positionierung einer pneumatisch oder elektromechanisch betätigbaren Zuspanneinrichtung, mit der bei einem Bremsvorgang nicht dargestellte Bremsbeläge gegen eine ebenfalls nicht gezeigte Bremsscheibe pressbar sind.

Die Zugstreben 5, die die Bremsscheibe überspannen, begrenzen seitlich eine Montageöffnung 3, durch die die Bremsbeläge einsetzbar sind. Dabei liegt ein reaktionsseitiger Bremsbelag an einer Anlagefläche 4 des Sattelrückens 2 an.

Zur Aufnahme bzw. Übertragung von beim Bremsen entstehenden Zuspannkräften sind die Zugstreben 5, die bezogen auf eine Drehachse M der Bremsscheibe spiegelsymmetrisch ausgebildet sind, entsprechend gestaltet.

Die Zugstreben 5 sind, gemäß der Erfindung in Längsrichtung gesehen auf den einander zugewandten Innenseiten, die die Montageöffnung 3 begrenzen, ausgehend vom Sattelrücken 2 zunächst als konvexe Ausformung 6 ausgebildet, die in eine konkave Ausformung 7 übergeht, die sich bis hin zum Gehäuse erstreckt, wo sie sich gekrümmt an das Gehäuse anschließt.

Die konvexe Ausformung 6 geht gleichfalls in einem Krümmungsradius in den Sattelrücken 2 bzw. die Anlagefläche 4 über, während der Übergang zwischen der konvexen Ausformung 6 zur konkaven Ausformung 7 als Scheitelpunkt 8 gleichfalls harmonisch, d.h. ohne ausgeprägte Kante verläuft.

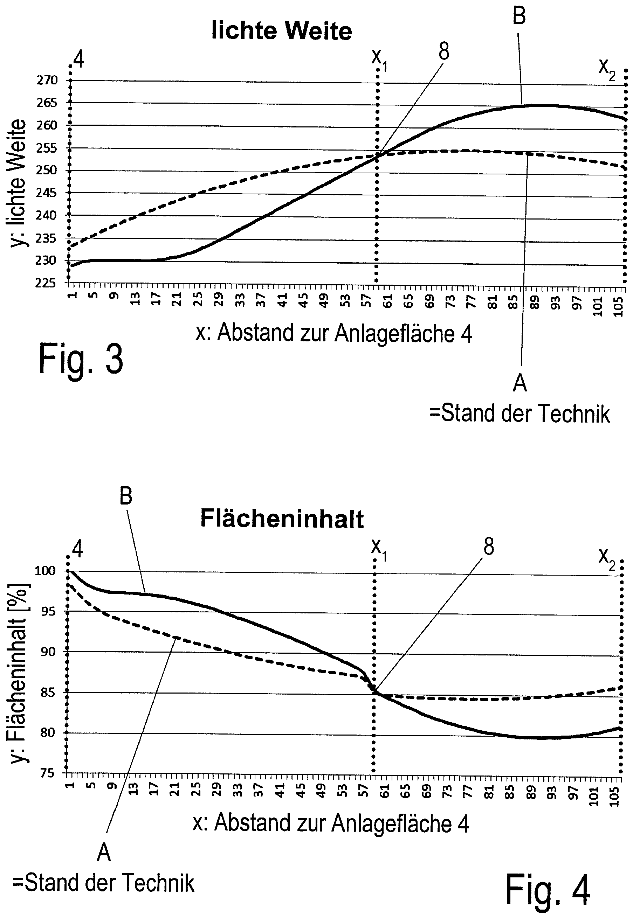

In der Figur 3 ist beispielhaft ein Vergleich der lichten Weite der Montageöffnung 3, also des Abstands zwischen den beiden Zugstreben 5 nach der Erfindung im Vergleich zu der lichten Weite nach dem Stand der Technik dargestellt. Dabei ist die die lichte Weite des neuen Bremssattels abbildende Kurve mit B bezeichnet und in Volllinie dargestellt, während die die lichte Weite der Montageöffnung nach dem Stand der Technik gestrichelt dargestellt und mit A ausgewiesen ist.

Es ist deutlich zu erkennen, dass die lichte Weite innerhalb der konvexen Ausformung 6, die als Abstand x1 von der Anlagefläche 4 zum Scheitelpunkt 8 gekennzeichnet ist, kleiner ist als die nach dem Stand der Technik. Im weiteren Verlauf, also im Bereich der konkaven Ausformung 7 ist die lichte Weite bis zum Abstand x2 bei dem Bremssattel gemäß der Erfindung größer als die lichte Weite nach dem Stand der Technik.

Entgegengesetzt verhält es sich beim Flächeninhalt der Zugstreben 5, die in der Figur 4 zum Vergleich dargestellt sind, wobei sich der Flächeninhalt auf den Querschnitt der Zugstrebe bezieht. Hier ist zu erkennen, dass, ausgehend von der Anlagefläche 4 mit 100 % der Flächeninhalt entsprechend der Kurve B bei dem neuen Bremssattel bis zum Abstand x1 größer ist als nach dem Stand der Technik (Kurve A), während im weiteren, konkaven Verlauf der Ausformung 7 der Flächeninhalt gemäß der Kurve B, bei diesem Beispiel bis zu 80 % abnimmt, angetragen auf der Abszisse, die in etwa die Länge der Zugstreben wiedergibt.

Wie sich weiter gezeigt hat, ist der maximale Spannungswert im Bereich der konvexen Ausformung 6 bei dem neuen Bremssattel nur 90 %, einer Sicherheit gegen Bruch von 1,2 und im Bereich der konkaven Ausformung 7 94 %, gleichbedeutend mit der Sicherheit = 1,1. Demgegenüber zum Vergleich ist der Spannungswert bei einem Bremssattel nach dem Stand der Technik im vergleichbaren Bereich mit der konvexen Ausformung 6 100 %, d.h., Sicherheit = 0,9 und im Vergleich mit dem Bereich der konkaven Ausformung 7 bei einem Spannungswert von 89 % und Sicherheit = 1,5.

Es ist also deutlich zu erkennen, dass die Spannungsverteilung bei dem neuen Bremssattel wesentlich gleichmäßiger und damit die Bruchsicherheit größer ist als bei Bremssätteln nach dem Stand der Technik, bei denen im hochbelasteten Bereich, nahe dem Sattelrücken 2 eine deutlich geringere Sicherheit gegeben ist als in der konvexen Ausformung gemäß der Erfindung.

## Patentansprüche

1. Bremssattel einer Scheibenbremse, mit zwei im Wesentlichen parallel und mit Abstand zueinander verlaufenden, einen Sattelrücken (2) und ein eine Aufnahmekammer (9) für Funktionsteile aufweisendes Gehäuse (1) starr miteinander verbindenden Zugstreben (5), **dadurch gekennzeichnet, dass** zumindest eine der Zugstreben (5) auf ihrer der anderen Zugstrebe (5) zugewandten Innenseite in Längserstreckung, ausgehend vom Sattelrücken (2), eine konvexe Ausformung (6) aufweist, die in eine konkave Ausformung (7) übergeht, wobei der Übergang zwischen der konvexen Ausformung (6) und der konkaven Ausformung (7) gerundet ist.

2. Bremssattel nach Anspruch 1, **dadurch gekennzeichnet, dass** beide Zugstreben (5), bezogen auf ihre Längserstreckung, spiegel- oder asymmetrisch ausgebildet sind.

3. Bremssattel nach Anspruch 1 oder 2,, **dadurch gekennzeichnet, dass** der Übergang der konvexen Ausformung (6) zum Sattelrücken (2) und/oder der Übergang von der konkaven Ausformung (7) zum Gehäuse (1) gerundet ausgeführt ist.

4. Bremssattel nach einem der vorhergehenden Ansprüche, **dadurch gekennzeichnet, dass** der Abstand (x1) des Übergangs der konvexen Ausformung (6) zur konkaven Ausformung (7) zu einer Anlagefläche (4) des Sattelrückens (2) 40 - 60 % des Abstandes (x2) von der Anlagefläche (4) zum Übergang der konkaven Ausformung (7) zum Gehäuse (1) ist.

5. Bremssattel nach Anspruch 4, **dadurch gekennzeichnet, dass** der Abstand (x1) etwa 50 %des Abstandes (x2) beträgt.

6. Bremssattel nach einem der vorhergehenden Ansprüche, **dadurch gekennzeichnet, dass** der Bremssattel aus Gusseisen besteht.

7. Bremssattel nach einem der vorhergehenden Ansprüche, **dadurch gekennzeichnet, dass** der Flächeninhalt im Querschnitt der Zugstrebe (5) im Bereich der konkaven Ausformung (7) geringer ist als im Bereich der konvexen Ausformung (6).

8. Bremssattel nach einem der vorhergehenden Ansprüche, **dadurch gekennzeichnet, dass** die lichte Weite zwischen den beiden Zugstreben (5) im Bereich der konkaven Ausformung (7) größer ist als im Bereich der konvexen Ausformung (6).

## Claims

1. A brake calliper of a disc brake comprising two brake application struts (5) which run essentially parallel to one another a certain distance apart and which connect rigidly together a calliper back (2) and a housing (1) having a receiving chamber for operating parts, **characterised in that** starting from the calliper back (2) and running along the length of its inner face facing the other brake application strut (5) at least one of the brake application struts (5) has a convex recess (6) which transitions into a concave recess (7), the transition between the convex recess (6) and the concave recess (7) being rounded.

2. A brake calliper according to claim 1, **characterised in that** the two brake application struts (5) are longitudinally mirror-symmetrical or asymmetrical.

3. A brake calliper according to claim 1 or 2, **characterised in that** the transition from the convex recess (6) to the calliper back (2) and/or the transition from the concave recess (7) to the housing (1) are/is rounded.

4. A brake calliper according to one of the preceding claims, **characterised in that** the distance (x1) between the transition from the convex recess (6) to the concave recess (7) and a contact surface (4) of the calliper back (2) represents 40% to 60% of the distance (x2) between the contact surface (4) and the transition from the concave recess (7) to the housing (1).

5. A brake calliper in accordance with claim 4, **characterised in that** the distance (x1) is approximately 50% of the distance (x2).

6. A brake calliper according to one of the preceding claims, **characterised in that** the brake calliper is made of cast iron.

7. A brake calliper according to one of the preceding claims, **characterised in that** the surface area of the cross-section of the brake application strut (5) is smaller in the region of the concave recess (7) than in the region of the convex recess (6).

8. A brake calliper according to one of the preceding claims, **characterised in that** the clear width between the two tension struts (5) is greater in the region of the concave recess (7) than in the region of the convex recess (6).

## Revendications

1. Etrier d'un frein à disque, ayant deux tirants (5), sensiblement parallèles, à distance l'un de l'autre et reliant entre eux rigidement un dos (2) de l'étrier, et un boîtier (1) ayant une chambre (9) de réception de parties fonctionnelles, **caractérisé en ce qu'**au moins l'un des tirants (5) a, du côté intérieur tourné vers l'autre tirant, (5) dans la direction longitudinale, à partir du dos (2) de l'étrier, une conformation (6) convexe, qui se transforme en une conformation (7) concave, la transition entre la conformation (6) convexe et la conformation (7) concave étant arrondie.

2. Etrier de frein suivant la revendication 1, **caractérisé en ce que** les deux tirants (5) sont, rapporté à leur étendue longitudinale, constitués en étant symétriques comme en un miroir ou en étant dissymétriques.

3. Etrier de frein suivant la revendication 1 ou 2, **caractérisé en ce que** la transition de la conformation (6) convexe en le dos (2) de l'étrier et/ou la transition de la conformation (7) concave au boîtier (1) est arrondie.

4. Etrier de frein suivant l'une des revendications précédentes, **caractérisé en ce que** la distance (x1) de la transition de la conformation (6) convexe à la conformation (7) concave à une surface (4) d'application du dos (2) de l'étrier, représente de 40 à 60% de la distance (x2) de la surface (4) d'application à la transition de la conformation (7) concave au boîtier (1).

5. Etrier de frein suivant la revendication 4, **caractérisé en ce que** la distance (x1) représente environ 50% de la distance (x2).

6. Etrier de frein suivant l'une des revendications précédentes, **caractérisé en ce que** l'étrier de frein est en fonte.

7. Etrier de frein suivant l'une des revendications précédentes, **caractérisé en ce que** la superficie en section transversale des tirants (5) est plus petite, dans la partie de la conformation (7) concave, que dans la partie de la conformation (6) convexe.

8. Etrier de frein suivant l'une des revendications précédentes, **caractérisé en ce que** la distance entre les deux tirants (5), dans la partie de la conformation (7) concave, est plus grande que dans la partie de la conformation (6) convexe.
